# EUROPÄISCHE PATENTSCHRIFT

(11) **EP 2 215 496 B1**
(45) Veröffentlichungstag und Bekanntmachung des Hinweises auf die Patenterteilung: **12.11.2014**
(21) Anmeldenummer: 08804434.2
(22) Anmeldetag: 19.09.2008
(51) Int. Cl.: G01S 7/41

(54) **VERFAHREN ZUM ERKENNEN VON LEBEWESEN**
METHOD FOR DETECTING LIVING BEINGS
PROCÉDÉ DE DÉTECTION DE LA PRÉSENCE D'UN ÊTRE VIVANT

(30) Priorität: 15.11.2007 DE 102007054507
(43) Veröffentlichungstag der Anmeldung: 11.08.2010
(73) Patentinhaber: Robert Bosch GmbH, 70442 Stuttgart (DE)
(72) Erfinder: RUOSS, Hans-Oliver, 70569 Stuttgart (DE); WALDSCHMIDT, Christian, 70197 Stuttgart (DE); DETLEFSEN, Juergen, 82335 Berg/farchach (DE); CZARNECKI, Sven, 74321 Bietigheim-bissingen (DE)
(86) Internationale Anmeldenummer: PCT/EP2008/062500
(87) Internationale Veröffentlichungsnummer: WO 2009/062773

(56) Entgegenhaltungen:
- EP-A- 0 600 571
- EP-B1- 0 791 839
- US-A- 4 400 700
- US-A- 5 150 099
- US-A- 5 345 240
- US-B1- 7 154 434

## Beschreibung

Die Erfindung betrifft ein Verfahren und eine Vorrichtung zum Erkennen von Lebewesen, ein Computerprogramm und ein Computerprogrammprodukt.

### Stand der Technik

Zur Erkennung von Menschen bzw. Personen werden heutzutage in der Regel bildgebende Sensoren, z.B. Videokameras, eingesetzt. Die Hardware als auch die Software dieser Systeme sind allerdings teuer. Abhängig vom Einsatzgebiet und einer Anforderung können jedoch auch andere Sensoren, wie z.B. Radarsensoren, zum Einsatz kommen.

Das Radar dient allgemein zur Entdeckung von Objekten und zur Bestimmung von Objektparametern wie deren Lage, Bewegungszustand und Beschaffenheit. Das einfachste Radarprinzip ist das CW (continuous wave bzw. Dauerstrich) -Radar. Bei diesem Radarprinzip wird ein das durch ein bewegtes Objekt entstehendes Dopplersignal ausgewertet und eine Relativ- bzw. Radialgeschwindigkeit des Objekts bestimmt. Als Relativ- bzw. Radialgeschwindigkeit wird die Geschwindigkeitskomponente bezeichnet, die gegen oder in die Ausbreitungsrichtung der elektromagnetischen Welle zeigt. Zudem kann aus der Phasenänderung des Empfangssignals die relativ zurückgelegte Wegstrecke berechnet werden.

Mit Hilfe verschiedener Modulationsverfahren, bspw. Frequenz- oder Pulsmodulation, erfolgt typischerweise eine Entfernungsbestimmung des Objekts bzw. Zielobjektes. Unter Ausnutzung der Entfernungsinformation und der reflektierten Leistung der Radarstrahlen kann näherungsweise auf den Rückstreuquerschnitt des Radarziels und somit des Zielobjekts, bspw. auf dessen Größe, Gestalt, Lage und Materialeigenschaft, geschlossen werden. Unter Ausnutzung verschiedener Antennenkonzepte oder einer mechanische Antennenschwenkung kann ebenfalls der Winkel zwischen Sensor und Zielobjekt gemessen werden und somit über die radiale Entfernung eine Lokalisierung im Raum erfolgen.

Heutzutage werden Radarsysteme u. a. auch in Einbruchmeldesystemen eingebaut. Hierbei wird im wesentlichen nur das durch bewegte Objekte entstehende Dopplersignal ausgewertet und für einen Alarm herangezogen. Aufgrund der rein auf die Erkennung einer Bewegung bezogenen Auswertung kommt es häufig zur Fehlauslösung. Diese Fehlalarme werden typischerweise durch Kleintiere, wie bspw. Vierbeiner, Vögel, Insekten oder Kriechtiere, technische Einrichtungen und Pflanzen, verursacht.

Die Druckschrift WO 03/049657 A1 betrifft eine Orientierungshilfe, die bspw. für sehbehinderte Personen geeignet ist. Diese Orientierungshilfe umfasst eine Sensoranordnung, die dazu ausgebildet ist, ein sich bewegendes Objekt zu erfassen und auf Grundlage dessen ein akustisches Signal bereitzustellen, das Auskunft über eine Dynamik des detektierten, sich bewegenden Objekts gibt, so dass in Abhängigkeit einer Geschwindigkeit und/oder Beschleunigung des sich bewegenden Objekts eine Frequenz des akustischen Signals variiert wird.

Ein Sicherheitssensor und ein Warnsystem für ein Fahrzeug sind aus der Druckschrift US 5 281 947 A bekannt. Dabei soll insbesondere mit dem Sicherheitssensor nachgewiesen werden, ob sich Personen innerhalb eines Gefahrenbereichs eines Fahrzeugs befinden. Hierzu wird mit dem Sicherheitssensor durch Radarwellen gestützt überprüft, ob sich in dem Gefahrenbereich ein Objekt mit einer vorgegebenen hinreichenden Dichte oder Masse, die einem Lebewesen, insbesondere einer Person, entspricht, bewegt. Falls sich dieses Lebewesen in dem Gefahrenbereich bewegen sollte, wird Alarm gegeben. Es ist vorgesehen, dass kleine Objekte, wie z. B. Blätter, Schneeflocken, leichter Regenfall, Nebel, kleine Äste, Steine oder Vögel hierbei nicht detektiert werden sollen.

Die Druckschrift EP 0 791 839 B1 beschreibt ein Verfahren zum Erfassen der Anwesenheit eines Lebewesens von einer bestimmten Art, insbesondere eines Menschen, in einem überwachten Raum. In diesem Raum ist ein Hyperfrequenz-Doppler-Fühler angeordnet, der ein Niederfrequenzsignal durch Interferenz zwischen einer gesendeten Welle und einer durch Doppler-Fizeau-Effekt frequenzverschobenen Welle abgibt, die von einem sich in em überwachten Raum bewegenden Ziel reflektiert wurde. Das Signal wird nach Verstärkung und ggf. Filterung behandelt, um im Frequenzspektrum des aus dem Fühler austretenden Signals der Art des Lebewesens eigene Merkmale erscheinen zu lassen, um nur die Anwesenheit eines solchen Lebewesens zu erkennen. Die Behandlung des Signals wird nach Digitalisierung durchgeführt, wobei nach einer Bestimmung der Gesamtenergie des Signals dessen Filterung erfolgt.

Die Druckschrift EP 0 600 571 A1 betrifft ein elektronisches Lebensdetektionssystem, insbesondere für die Suche nach Verschütteten oder die Überwachung von Gebäuden. Das System umfasst eine Mikrowellensende- und -empfangseinrichtung zur Erzeugung und Einstrahlung von Mikrowellen in einen zu untersuchenden Bereich und zur Registrierung des aus dem überwachten Bereich reflektierten Mikrowellensignals, das bei Anwesenheit von Lebewesen in dem Bereich mit deren Lebensfunktionen entsprechenden Frequenzen moduliert wird.

### Offenbarung der Erfindung

Bei dem erfindungsgemäßen Verfahren zum Erkennen eines Lebewesens ist vorgesehen, dass mittels Radarstrahlen ein Objekt erfasst wird, und dass Radardaten zu dem erfassten Objekt derart ausgewertet werden, dass mindestens eine Eigenschaft des Objekts klassifiziert und mit Charakteristika für mindestens ein bekanntes Lebewesen verglichen wird, so dass automatisch bestimmt wird, um welche Klasse von Lebewesen es sich bei dem Objekt handelt.

Folglich findet bei Ausführung der Erfindung eine Klassifizierung statt, so dass festgestellt weden kann, um welche Klasse, Art oder Gattung von Lebewesen, bspw. Mensch, Tier, Insekt, evt. Vierbeiner oder ähnlichem, es sich bei dem Objekt handelt.

In einer Ausgestaltung ist das Verfahren u.a. zum Erkennen eines Menschen geeignet. In diesem Fall wird die mindestens eine Eigenschaft des Objekts mit bekannten Eigenschaften bzw. Charakteristika und folglich Merkmalen für Menschen verglichen. Durch diese Maßnahme kann bestimmt werden, ob es sich bei diesem erfassten Objekt um einen Menschen handelt oder nicht.

Unabhängig davon, ob nun zumindest erkannt wird, ob es sich bei dem erfassten Objekt um ein Lebewesen handelt oder ob bestimmt wird, um welche Klasse oder Art von Lebewesen, bspw. einen Menschen, es sich handelt, wird im Rahmen des Verfahrens von einem Radarsensor eine Umfelderkennung eines von dem Radarsensor einsehbaren Bereichs durchgeführt, in dem typischerweise Objekte, die sich ggf. bewegen oder Bewegungen ausführen, ohne dabei ihre Position zu ändern, angeordnet sind. Es werden in der Regel nur Objekte klassifiziert, die ihre Position verändern, da fixierte Objekte in der Regel keine Gefahr darstellen. Ortsgebundene Objekte werden auch im Falle von betreutem Wohnen (Assisted Living) untersucht. Mit dem Verfahren ist eine Identifikation der Objekte möglich, wobei erkannt wird, um welche Klasse von Lebewesen es sich bei einem erfassten Objekt.

Als Charakteristika können bspw. Bewegungsmuster, Vitalfunktionen und/oder Körperabmessungen von Lebewesen und somit auch von Menschen verwendet werden. Als ein Charakteristikum kann jedes Merkmal verwendet werden, das ein Lebewesen von einem unbelebten Objekt und insbesondere einen Menschen von einem anderen Lebewesen unterscheidet.

Die Charakteristika von dem mindesten einen bekannten Lebewesen sind zur Durchführung des Verfahrens abgespeichert und werden zur Durchführung des Vergleichs mit dem erfassten Objekt abgerufen, wobei u. a. Radardaten zu dem Objekt bzw. Zielobjekt mit gespeicherten Daten zu den Charakteristika verglichen werden. Um Menschen oder andere besondere Lebewesen von anderen Lebewesen zu unterscheiden, ist ein Vergleich mit hinreichend genau spezifizierten Charakteristika möglich.

Bei einer Variante des Verfahrens kann berücksichtigt werden, mit welcher Regehmäßigkeit das erfasste Objekt eine sich wiederholende Bewegung und/oder einen bspw. harmonischen Bewegungsablauf ausführt. Anhand der Regehmäßigkeit der Bewegung und/oder des Bewegungsablaufs kann u. a. ausgeschlossen werden, dass es sich bei dem erfassten Objekt um ein künstliches oder unbelebtes Objekt handelt, das Bewegungen und/oder Bewegungsabläufe typischerweise rein mechanisch und somit mit hoher Regelmäßigkeit ausführt.

Wird bei einer Ausführung des Verfahrens erkannt, dass das erfasste Objekt bzw. Zielobjekt seine Bewegung oder seinen Bewegungsablauf mit geringfügiger Regelmäßigkeit ausführt, ist davon auszugehen, dass es sich um ein Lebewesen handelt. Somit ist im Rahmen des Verfahrens auch eine Identifikation von Lebewesen und somit eine Unterscheidung von Lebewesen von unbelebten Objekte, die sich bewegen, möglich.

Weiterhin kann im Rahmen des Verfahrens ein über die Radarstrahlen bereitgestelltes Dopplersignal des Objekts ausgewertet werden. Somit ist es u. a. möglich, kinematische Größen, wie bspw. den Ort oder den Weg, bei Änderungen von Ortskoordinaten, die Geschwindigkeit oder Beschleunigung des Objekts zu bestimmen.

Somit ist je nach Ausführungsform des Verfahrens eine Objekterkennung unter Zuhilfenahme einer Objektklassifizierung möglich.

Die Erfindung betrifft auch eine Vorrichtung zum Erkennen eines Lebewesens, die dazu ausgebildet ist, mittels Radarstrahlen ein Objekt zu erfassen und die Radardaten zu dem Objekt derart auszuwerten, dass mindestens eine Eigenschaft des Objekts klassifiziert und mit Charakteristika für mindestens ein bekanntes Lebewesen verglichen wird, so dass die Vorrichtung automatisch bestimmt, um welche Klasse bzw. Art von Lebewesen es sich bei dem Objekt handelt.

Diese Vorrichtung ist weiterhin dazu ausgebildet, die mindestens eine Eigenschaft des Objekts zu klassifizieren und mit Charakteristika für das mindestens eine bekannte Lebewesen, typischerweise einen Menschen, zu vergleichen, so dass die Vorrichtung automatisch bestimmen kann, ob es sich bei dem Objekt um einen Menschen handelt. Folglich ist die Vorrichtung in Ausgestaltung zum Erkennen bzw. Klassifizierung von Menschen geeignet.

Als eine mögliche Komponente weist die Vorrichtung eine zum Erkennen des Objekts ausgebildete Identifikationseinheit auf. Diese Identifikationseinheit ist bspw. dazu ausgebildet, die mindestens eine Eigenschaft des Objekts mit typischerweise gespeicherten Charakteristika für bekannte Lebewesen zu vergleichen. Zur Durchführung mindestens eines Schritts des Verfahrens kann die Vorrichtung und insbesondere die Identifikationseinheit eine Recheneinheit aufweisen, die dazu ausgebildet ist, Charakteristika zu bekannten Lebewesen, die auf einer Speichereinheit der Vorrichtung und insbesondere der Identifikationseinheit gespeichert sind, zur Durchführung des Vergleichs abzurufen.

Außerdem kann die Vorrichtung in Ausgestaltung auch eine Antenne, ein als Radar-Frontend ausgebildetes Eingangsmodul, ein Basisbandverarbeitungsmodul und/oder ein Basisdatenextraktionsmodul aufweisen. Dabei können das Basisbandverarbeitungsmodul und/oder das Basisdatenextraktionsmodul auch in der Identifikationseinheit integriert sein und/oder mit dieser Identifikationseinheit zusammenwirken.

Die beschriebene Vorrichtung ist dazu ausgebildet, sämtliche Schritte des vorgestellten Verfahrens durchzuführen. Dabei können einzelne Schritte dieses Verfahrens auch von einzelnen Komponenten der Vorrichtung durchgeführt werden. Weiterhin können Funktionen der Vorrichtung oder Funktionen von einzelnen Komponenten der Vorrichtung als Schritte des Verfahrens umgesetzt werden.

Die Erfindung betrifft weiterhin ein Computerprogramm mit Programmcodemitteln, um alle Schritte eines beschriebenen Verfahrens durchzuführen, wenn das Computerprogramm auf einem Computer oder einer entsprechenden Recheneinheit, insbesondere in einer erfindungsgemäßen Vorrichtung, ausgeführt wird.

Das erfindungsgemäße Computerprogrammprodukt mit Programmcodemitteln, die auf einem computerlesbaren Datenträger gespeichert sind, ist zum Durchführen aller Schritte eines beschriebenen Verfahrens ausgebildet, wenn das Computerprogramm auf einem Computer oder einer entsprechenden Recheneinheit, insbesondere in einer erfindungsgemäßen Vorrichtung, ausgeführt wird.

Mit Hilfe der Vorrichtung, die einen Radarsensor umfasst, kann u. a. eine Personen- bzw. Menscherkennung bzw. eine radarbasierte Menscherkennung realisiert werden. Hierzu werden elektromagnetische Wellen im MHz- bis GHz-Bereich oder Mikrowellen verwendet. Mikrowellen sind elektromagnetische Wellen, deren Wellenlänge zwischen 1 m, einer Frequenz von 300 MHz entsprechend, und 1 mm, einer Frequenz von 300 GHz entsprechend, liegt.

Dabei ist aufgrund der Nutzung von Radarstrahlen auch eine Menscherkennung hinter Festzielen, wie z.B. Wänden, Möbeln usw., möglich. Hierzu kann zur Menscherkennung ein kostengünstiger Standard-Radarsensor, z.B. Puls-Dopplerradar, FMCW-Radar oder PN-Radar, verwendet werden.

Die Erfindung ermöglicht somit eine Lebewesenerkennung und Lebewesenklassifizierung mit Hilfe eines Radarsensors. Anhand der verschiedenen Bewegungsmuster von Mensch, Tier und nicht lebender Objekte, d. h. technischen Einrichtungen und von Pflanzen, lassen sich die dabei entstehende Dopplersignale über die Zeit und über die zurückgelegte sowie auch absolute Wegstrecke auswerten und zuordnen, um somit eine Menscherkennung, z.B. bei Einbruchmeldesystemen, Bewegungsmeldern usw. zu realisieren.

Im Vergleich zu bisherigen Systemen, in der Regel Videosystemen, können nunmehr Kosten reduziert werden. Außerdem ist auch ein Durchdringen von Hindernissen, Wänden, Möbeln, usw. möglich. Eine Messung des Abstandes zum Zielobjekt kann mit der Erfindung ebenfalls durchgeführt werden. Weiterhin kann eine Auswertung radialer Bewegungen, d. h. direkter Bewegungen auf den Sensor zu oder vom Sensor weg, erfolgen.

Die vorgesehene Menscherkennung kann anhand eines spezifischen Dopplersignals, das üblicherweise ein Dopplerspektrum umfasst, und/oder eines zeitlichen Verlaufs dieses Dopplersignals des Zielobjekts realisiert werden, wobei das Dopplerspektrum durch einzelne Bewegungstrajektorien des Zielobjekts hervorgerufen wird. Einzelne Mikrodoppleranteile dieses Dopplerspektrums, die typischerweise durch eine Bewegung einzelner Gliedmaßen einer Person hervorgerufen werden, können im Rahmen der Erfindung extrahiert und korreliert werden.

Hoch-periodische Signale, die sich durch eine hohe Regelmäßigkeit für sich wiederholende Bewegungen auszeichnen und in einer Variante als Störsignale eingestuft werden, können unterdrückt werden. Derartige hoch-periodische Signale werden in der Regel nur von technischen Einrichtungen, bspw. Motoren, Leuchtstoffröhren oder Robotern erzeugt.

Biologische Signale der Person, die auch als Vitalfunktionen bezeichnet werden können und bspw. durch Atmung oder Herzschlag einer vorzugsweise ortsfesten, fixierten Person, die bspw. sitzt, liegt oder sich irgendwo anlehnt, hervorgerufen werden, können ebenfalls ausgewertet und zur Identifikation genutzt werden. Eine derartige Vorgehensweise ist auch bei sich bewegenden, d. h. gehenden oder laufenden, Personen möglich.

In einer Ausführung kann eine Einstufung in harte und weiche Kriterien für die Menscherkennung erfolgen. Eine derartige Einstufung kann einstufige Kriterien, mehrstufige Kriterien, Verbundkriterien oder Abgrenzungskriterien umfassen.

Durch Berücksichtigung von Abgrenzungskriterien kann eine Unterscheidung von technischen Einrichtungen vorgenommen werden. Weiterhin wird in Ausgestaltung eine ein- und mehrseitige Schwellwertentscheidung der verschiedenen Messparameter, bspw. Geschwindigkeit, Wegstrecke, Entfernung, RCS (Radar Cross Section bzw. Radarquerschnitt) und dergleichen, bereitgestellt werden. Es ist auch eine logische sowie multidimensionale Kombination aus Bewegungsmuster, Geschwindigkeit, Wegstrecke, Rückstreuquerschnitt (RES) sowie anderer Parameter realisierbar.

Das Erkennen von Lebewesen kann in einer weiteren Ausgestaltung durch Berücksichtigung von elektromagnetischen Wellen im Infrarotbereich und somit im Bereich kurzwelliger Mikrowellen gestützt werden, so dass eine Identifikation des Lebewesens und somit eine Unterscheidung des Lebewesens von einem unbelebten Objekt durch Bestimmung der Körpertemperatur möglich ist. Mit Infrarotsensoren kann hierzu die Wärmestrahlung gemessen werden.

Die Erfindung kann bei Sicherheitssystemen (Security Systems) in Einbruchmeldesysteme einfließen, um eine Fehlalarmrate zu reduzieren. Weitere relevante Anwendungsgebiete sind betreutes Wohnen (Assisted Living) und Ferngesundheitspflege (Remote Healthcare).

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

- Figur 1: zeigt in schematischer Darstellung eine Ausgestaltung einer Vorrichtung zum Erkennen eines Zielobjekts, bzw. Ziellebewesens.
- Figur 2: zeigt in schematischer Darstellung einen Bewegungsablauf einer gehenden Person.

### Ausführungsform der Erfindung

Die Erfindung ist anhand einer Ausführungsfom in den Zeichnungen schematisch dargestellt und wird im folgenden unter Bezugnahme auf die Zeichnungen ausführlich beschrieben.

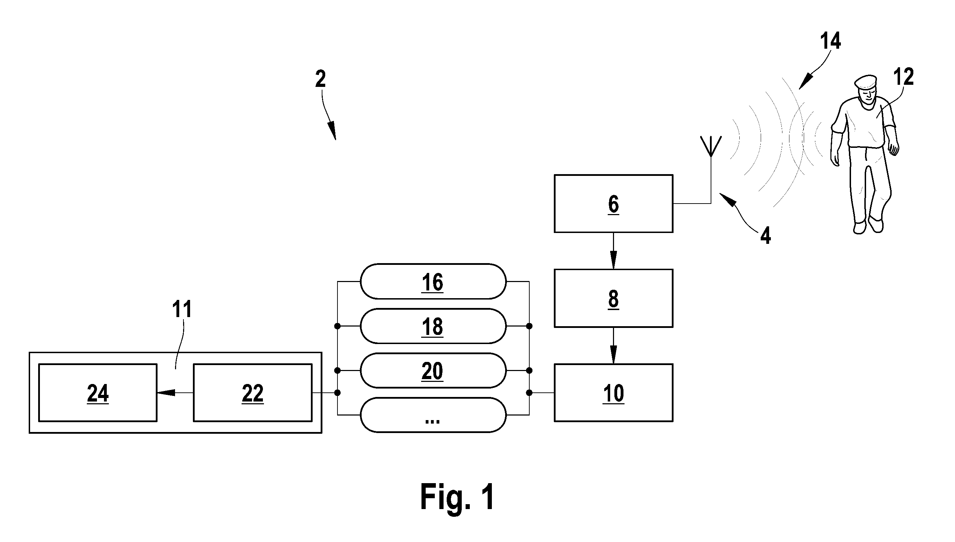

Ein Aufbau und eine Funktionsweise einer Vorrichtung 2 für eine Menscherkennung mit Radarstrahlen sind in Figur 1 schematisch dargestellt. Diese Vorrichtung umfasst eine Antenne 4, ein als Radar-Frontend 6 ausgebildetes Eingangsmodul, ein Basisbandverarbeitungsmodul 8, ein Basisdatenextraktionsmodul 10 und eine Identifikationseinheit 11.

Das Radar-Frontend 6 erzeugt ein hochfrequentes Signal, z.B. im Gigahertzbereich, das über die Antenne 4 abgestrahlt wird. Das hochfrequente Signal kann ggf. moduliert und gerichtet sein. Die von einem Objekt 12 reflektierten elektromagnetischen Welle 14 werden über die Antenne 4 empfangen und im Radar-Frontend 6 in ein Basisband gemischt. In dem Basisbandverarbeitungsmodul 8 werden die empfangenen Rohsignale verstärkt, gefiltert und aufbereitet und bspw. bzgl. Amplitude, Frequenz, Phase, Polarisation, Laufzeit und ggf. Einfallswinkel verarbeitet. In dem Basisdatenextraktionsmodul 10 werden die Basisdaten, wie z.B. Geschwindigkeit 16, Entfernung 18, Spektrum, spektrale zeitliche Veränderung, Rückstreuquerschnitt 20 (RCS, Radar Cross Section) usw., berechnet.

In der Identifikationseinheit 11 findet mit Hilfe eines geeigneten Algorithmus 22 eine Klassifizierung 24 des Zielobjekts statt. Die Objektklassifizierung erfolgt anhand verschiedener Kriterien in unterschiedlicher und/oder logischer Kombination, wobei mindestens eine Eigenschaft des erfassten Objekts 12 mit Charakteristika bekannter Lebewesen und speziell von Menschen verglichen werden.

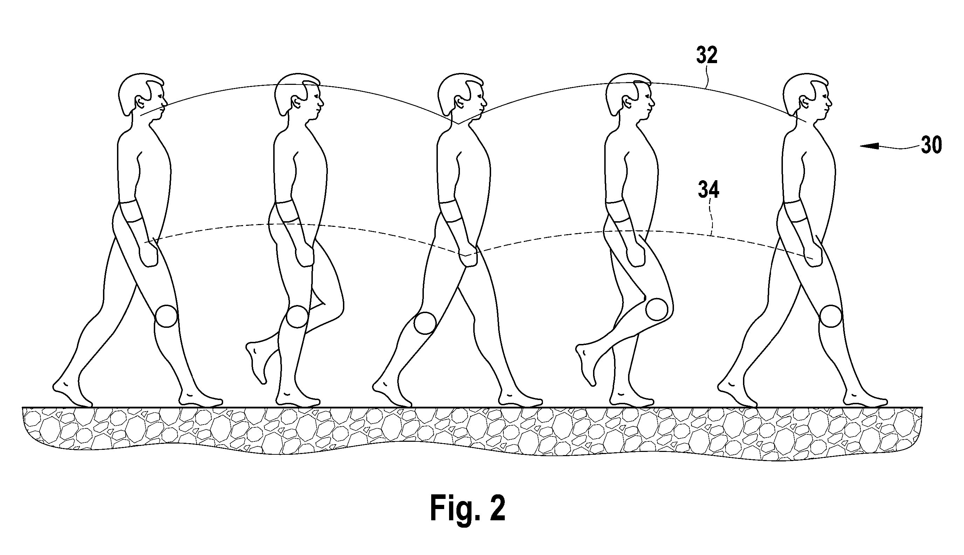

Figur 2 zeigt in schematischer Darstellung ein Beispiel aus der Kinematik eines Menschen 30 bzw. einer Person mit unterschiedlichen Geschwindigkeits- und Bewegungsprofilen, die von einer Ausgestaltung einer erfindungsgemäßen Vorrichtung bei einer Variante des erfindungsgemäßen Verfahrens erkannt und einer Klasse, bspw. einer Gattung oder Art, von Lebewesen zugeordnet werden können, so dass die Person als solche identifiziert wird. Hierzu werden bekannte Charakteristika des Menschen 30 oder allgemein von Lebewesen berücksichtigt. In der Regel werden zur Klassifizierung von Lebewesen Bewegungsabläufe, die für bestimmte Klassen von Lebewesen, z. B. Vierbeinern, Vögeln oder Insekten typisch sind, berücksichtigt.

In dem anhand von Figur 2 gezeigten Beispiel sind als Charakteristika Bewegungsmuster des Menschen 30 für eine Kopf- und Oberkörperbewegung 32, eine laterale Hüftbewegung 34, eine Beinbewegung und eine Armbewegung dargestellt. Derartige Bewegungsmuster sind in Ausgestaltung in einer Vorrichtung zur Durchführung des erfindungsgemäßen Verfahrens gespeichert und werden bei einer Variante des Verfahrens zum Vergleich eines Bewegungsablaufs eines erfassten Objekts mit einem Menschen herangezogen und zur Identifikation des Objekts verwendet.

## Patentansprüche

1. Verfahren zum Erkennen eines Lebewesens, bei dem mittels Radarstrahlen ein Objekt (12) erfasst wird, und bei dem Radardaten zu dem erfassten Objekt (12) derart ausgewertet werden, dass mindestens eine Eigenschaft des Objekts (12) klassifiziert und mit Charakteristika für mindestens ein bekanntes Lebewesen verglichen wird, so dass bestimmt wird, um welche Klasse von Lebewesen es sich bei dem Objekt (12) handelt,
**dadurch gekennzeichnet, dass**
mit einem Infrarotsensor eine Wärmestrahlung gemessen wird, wobei eine Identifikation des Lebewesens und somit eine Unterscheidung des Lebewesens von einem unbelebten Objekt durch Bestimmung der Körpertemperatur möglich ist.

2. Verfahren nach Anspruch 1, zum Erkennen eines Menschen, bei dem die mindestens eine Eigenschaft des Objekts (12) mit bekannten Charakteristika für Menschen (30) verglichen wird, so dass bestimmt wird, ob es sich bei dem Objekt (12) um einen Menschen (30) handelt oder nicht.

3. Verfahren nach Anspruch 1 oder 2, bei dem als Charakteristika Bewegungsmuster von Lebewesen verwendet werden.

4. Verfahren nach einem der voranstehenden Ansprüche, bei dem als Charakteristika Vitalfunktionen von Lebewesen verwendet werden.

5. Verfahren nach einem der voranstehenden Ansprüche, bei dem als Charakteristika Körperabmessungen von Lebewesen verwendet werden.

6. Verfahren nach einem der voranstehenden Ansprüche, bei dem ein Dopplersignal des Objekts (12) ausgewertet wird.

7. Vorrichtung zum Erkennen eines Lebewesens, die dazu ausgebildet ist, mittels Radarstrahlen ein Objekt (12) zu erfassen und die Radardaten zu dem Objekt derart auszuwerten, dass mindestens eine Eigenschaft des Objekts (12) klassifiziert und mit Charakteristika für mindestens ein bekanntes Lebewesen verglichen wird, so dass die Vorrichtung (2) bestimmt, um welche Klasse von Lebewesen es sich bei dem Objekt (12) handelt,
**dadurch gekennzeichnet, dass**
mit einem Infrarotsensor eine Wärmestrahlung zu messen ist, wobei eine Identifikation des Lebewesens und somit eine Unterscheidung des Lebewesens von einem unbelebten Objekt durch Bestimmung der Körpertemperatur möglich ist.

8. Vorrichtung nach Anspruch 7, die eine zum Erkennen des Objekts (12) ausgebildete Identifikationseinheit (11) aufweist.

9. Computerprogramm mit Programmcodemitteln, um alle Schritte eines Verfahrens nach einem der Ansprüche 1 bis 6 durchzuführen, wenn das Computerprogramm auf einem Computer oder einer entsprechenden Recheneinheit, insbesondere in einer Vorrichtung (2) nach Anspruch 7 oder 8, ausgeführt wird.

10. Computerprogrammprodukt mit Programmcodemitteln, die auf einem computerlesbaren Datenträger gespeichert sind, um alle Schritte eines Verfahrens nach einem der Ansprüche 1 bis 6 durchzuführen, wenn das Computerprogramm auf einem Computer oder einer entsprechenden Recheneinheit, insbesondere in einer Vorrichtung (2) nach Anspruch 7 oder 8, ausgeführt wird.

## Claims

1. Method for identifying a living being, in which an object (12) is detected by means of radar rays and in which radar data in respect of the detected object (12) are evaluated in such a way that at least one property of the object (12) is classified and compared to characteristics for at least one known living being such that the class of living being of the object (12) is determined,
**characterized in that**
heat radiation is measured using an infrared sensor, wherein it is possible to identify the living being and therefore distinguish the living being from an inanimate object by determining the body temperature.

2. Method according to Claim 1, for identifying a human, in which the at least one property of the object (12) is compared to known characteristics for humans (30) such that whether or not the object (12) is a human (30) is determined.

3. Method according to Claim 1 or 2, in which movement patterns of living beings are used as characteristics.

4. Method according to one of the preceding claims, in which vital functions of living beings are used as characteristics.

5. Method according to one of the preceding claims, in which body dimensions of living beings are used as characteristics.

6. Method according to one of the preceding claims, in which a Doppler signal of the object (12) is evaluated.

7. Device for identifying a living being, which is embodied to detect an object (12) by means of radar rays and to evaluate the radar data in respect of the object in such a way that at least one property of the object (12) is classified and compared to characteristics for at least one known living being such that the device (2) determines the class of living being of the object (12),
**characterized in that**
heat radiation is to be measured using an infrared sensor, wherein it is possible to identify the living being and therefore distinguish the living being from an inanimate object by determining the body temperature.

8. Device according to Claim 7, comprising an identification unit (11) embodied to identify the object (12).

9. Computer program comprising program code means to carry out all steps of a method according to one of Claims 1 to 6 when the computer program is executed on a computer or a corresponding computational unit, in particular in a device (2) according to Claim 7 or 8.

10. Computer program product comprising program code means stored on a computer-readable data medium, for carrying out all steps of a method according to one of Claims 1 to 6 when the computer program is executed on a computer or a corresponding computational unit, in particular in a device (2) according to Claim 7 or 8.

## Revendications

1. Procédé d'identification d'un être vivant, dans lequel un objet (12) est détecté au moyen de faisceaux radar et dans lequel des données radar sont évaluées pour obtenir l'objet détecté (12) de telle manière qu'au moins une propriété de l'objet (12) soit classée et soit comparée à des caractéristiques concernant au moins un être vivant connu afin de déterminer à quelle classe d'objet vivant appartient l'objet (12),
**caractérisé en ce qu'**un rayonnement thermique est mesuré à l'aide d'un capteur infrarouge, dans lequel une identification de l'être vivant et par conséquent, une différenciation de l'être vivant par rapport à un objet inanimé est possible par détermination de la température du corps.

2. Procédé selon la revendication 1, destiné à identifier un être humain, dans lequel l'au moins une propriété de l'objet (12) est comparée à des caractéristiques connues des êtres humains (30) afin de déterminer si l'objet (12) est ou non un être humain (30).

3. Procédé selon la revendication 1 ou 2, dans lequel on utilise en tant que caractéristiques des modèles de mouvement d'être vivants.

4. Procédé selon l'une quelconque des revendications précédentes, dans lequel on utilise en tant que caractéristiques des fonctions vitales d'êtres vivants.

5. Procédé selon l'une quelconque des revendications précédentes, dans lequel on utilise en tant que caractéristiques des mesures corporelles d'être vivants.

6. Procédé selon l'une quelconque des revendications précédentes, dans lequel un signal Doppler de l'objet (12) est évalué.

7. Dispositif destiné à détecter un être vivant, conçu pour détecter un objet (12) au moyen de faisceaux radar et pour évaluer les données radar pour obtenir l'objet de telle manière qu'au moins une propriété de l'objet (12) soit classée et comparée à des caractéristiques concernant l'au moins un être vivant connu, de manière à ce que le dispositif (2) détermine à quelle classe d'êtres vivants appartient l'objet (12),
**caractérisé en ce qu'**un rayonnement thermique est mesuré à l'aide d'un capteur infrarouge, dans lequel une identification de l'être vivant, et par conséquent, une différenciation de l'être vivant par rapport à un objet inanimé est possible par détermination de la température du corps.

8. Dispositif selon la revendication 7, comprenant une unité d'identification (11) conçue pour identifier l'objet (12).

9. Programme informatique comprenant des moyens à code de programme destinés à exécuter toutes les étapes d'un procédé selon l'une quelconque des revendications 1 à 6, lorsque le programme informatique est exécuté sur un ordinateur ou une unité de calcul correspondante, notamment dans un dispositif (2) selon la revendication 7 ou 8.

10. Produit de programme informatique comprenant des moyens à code de programme qui sont stockés sur un support de données lisible par ordinateur destiné à mettre en oeuvre toutes les étapes d'un procédé selon l'une quelconque des revendications 1 à 6, lorsque le programme informatique est exécuté sur un ordinateur ou une unité de calcul correspondante, notamment dans un dispositif (2) selon la revendication 7 ou 8.
